# FASCICULE DE BREVET EUROPEEN

(11) **EP 3 020 300 B1**
(45) Date de publication et mention de la délivrance du brevet: **02.12.2020**
(21) Numéro de dépôt: 14425143.6
(22) Date de dépôt: 11.11.2014
(51) Int. Cl.: A43B 5/04, A43B 7/28, A43B 19/00

(54) **Chausson pour chaussure de sport**
Innenschuh für Sportschuh
Sports-shoe liner

(43) Date de publication de la demande: 18.05.2016
(73) Titulaire: Rossignol Lange S.R.L., 31044 Montebelluna (IT)
(72) Inventeur: Canova, Ruggero, 32032 Feltre (BL) (IT); Basso, Adriana, 31044 Montebelluna (TV) (IT); Meneghini, Giovanni, 36022 Cassola (VI) (IT)
(74) Mandataire: Novaimo

(56) Documents cités:
- FR-A1- 2 460 118
- US-A- 5 746 015
- US-A1- 2010 212 183
- US-A1- 2011 265 347

## Description

La présente invention concerne un chausson pour chaussure de sport, ainsi qu'une chaussure de sport en tant que telle intégrant un tel chausson. Elle est particulièrement adaptée à un chausson de chaussure de ski, ou plus généralement à un élément chaussant pour sport de glisse.

Le document FR2460118 décrit un chausson pour chaussure de ski, dont la paroi comprend une couche intérieure remplie d'un élément en polyéthylène expansé, soumis à un procédé de thermo-compression. Ce chausson est ensuite chauffé à une certaine température pour laquelle la mousse de polyéthylène a tendance à une ré-expansion, pour reprendre une partie du volume plus important qu'elle occupait initialement avant sa thermo-compression. Un acquéreur d'un tel chausson profite de cette propriété pour former le chausson à la forme de son pied : lorsque le chausson est porté à la température d'expansion de sa paroi, il chausse le chausson dont la paroi vient naturellement épouser la forme de son pied lors de son expansion, qu'elle conserve par la suite après son refroidissement. Ce procédé permet à chacun de personnaliser la forme du chausson à l'anatomie de son pied et d'atteindre un confort optimal.

En pratique, ce procédé de mise en forme du chausson est réalisé au point de vente du chausson, par le vendeur. Ce dernier positionne d'abord le chausson dans un four prévu à cet effet puis le récupère quand il estime que sa température est la bonne. Dans de nombreux cas, on constate que le vendeur laisse le chausson trop peu de temps dans le four, notamment s'il est très occupé et pressé, et la température atteinte par le chausson est insuffisante pour que sa paroi se déforme, ce qui rend le procédé inefficace. En variante, le vendeur peut aussi porter le chausson par erreur à trop forte température, auquel cas l'acheteur risque d'être indisposé par la chaleur. D'autre part, à trop forte température, le matériau pourrait subir des dégradations pouvant être irréversibles. Pour ces raisons, la mise en forme des chaussons existants s'avère aujourd'hui peu fiable.

Le document US2010/0212183 décrit un chausson pour chaussure de sport, comprenant une paroi comprenant une couche formée d'un matériau de rembourrage thermoformable apte à sa mise en forme après son chauffage lorsqu'il est porté à une température de déformation, le chausson comprenant un dispositif d'affichage qui indique quand la température de déformation a été atteinte.

Un objet de l'invention consiste à proposer un chausson pour chaussure de sport dont la mise en forme au pied d'un utilisateur soit fiable et sécurisée.

A cet effet, l'invention repose sur un indicateur pour chausson pour chaussure de sport, caractérisé en ce qu'il comprend un élément déformable apte à se déformer à une température de déformation d'un matériau de rembourrage thermoformable d'une paroi du chausson, pour indiquer que le chausson a été porté à une température sensiblement égale à sa température de déformation.

L'invention est définie par les revendications.

Ces objets, caractéristiques et avantages de la présente invention seront exposés en détail dans la description suivante de modes d'exécution particuliers faits à titre non-limitatif en relation avec les figures jointes parmi lesquelles :
La figure 1 représente une vue de côté d'un chausson de chaussure de ski selon un mode de réalisation de l'invention.
La figure 2 représente une vue de face du chausson selon le mode de réalisation de l'invention.
La figure 3 représente une vue en coupe par un plan transverse vertical du chausson selon le mode de réalisation de l'invention.
La figure 4 représente une vue en perspective de dessus d'un insert du chausson selon le mode de réalisation de l'invention.
La figure 5 représente une vue en coupe de la paroi de l'insert du chausson selon le mode de réalisation de l'invention.
La figure 6 représente une vue de la paroi intérieure au niveau de l'insert du chausson selon le mode de réalisation de l'invention.
La figure 7 représente une vue en coupe de la paroi de l'insert après déformation de l'insert selon le mode de réalisation de l'invention.

L'invention va être illustrée dans le cas d'un chausson pour chaussure de ski, en particulier pour le ski alpin ou de randonnée mais aussi pour le surf ou le ski de fond, mais elle pourrait aussi être implémentée pour tout chausson de chaussure de sport, notamment destinée aux sports de glisse sur neige ou sur eau, et plus généralement pour tout élément chaussant d'une chaussure de sport, voire sur une chaussure de sport en tant que telle.

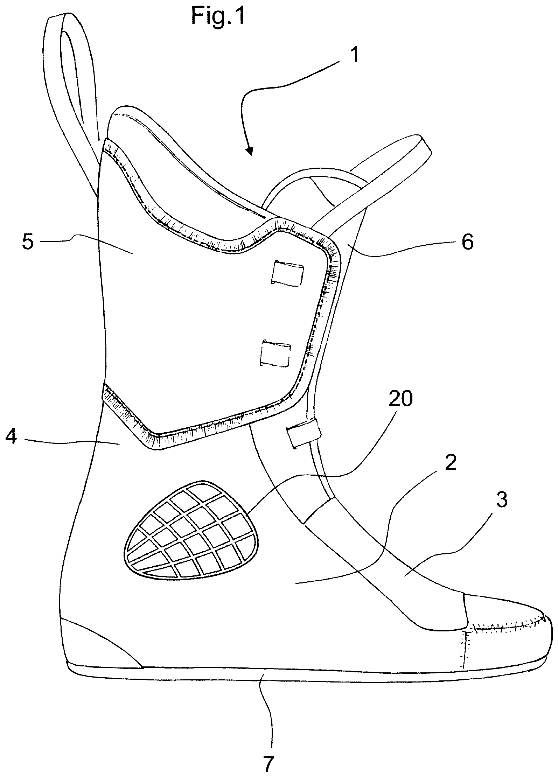

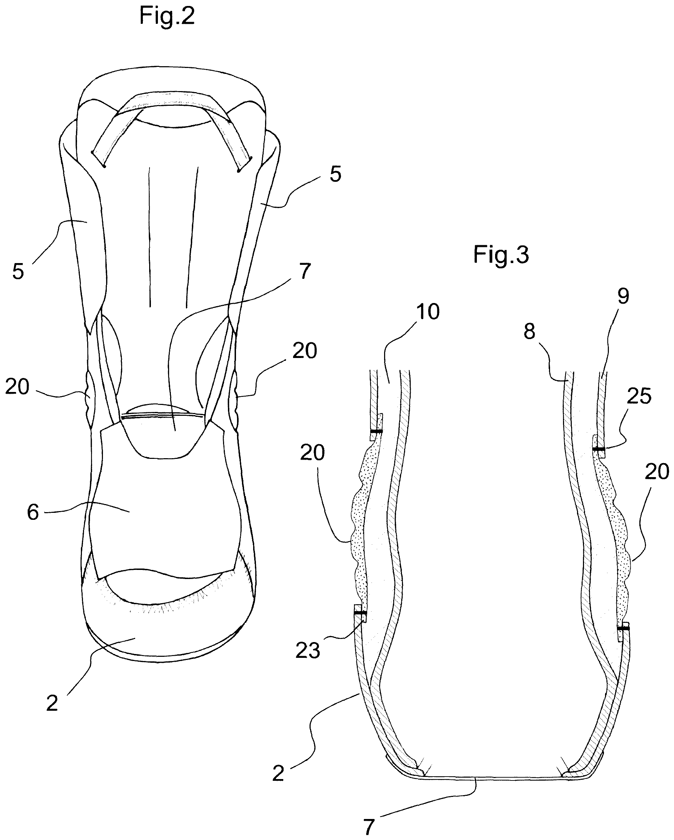

Les figures 1 et 2 illustrent un chausson 1 de confort pour chaussure de ski alpin. Ce chausson 1 présente une forme conventionnelle : il comprend une partie basse 2 entourant complètement le pied, recouvrant notamment le cou de pied 3 et remontant jusqu'au niveau de la cheville 4, puis une partie haute 5 plus ouverte, destinée à entourer le bas de jambe, comprenant deux rabats latéraux positionnés vers l'avant à proximité d'une une languette 6 frontale fixée à la partie basse 2 au niveau du cou de pied.

La partie haute présente généralement une rigidité supérieure à la partie basse, mais pourrait être aussi d'une rigidité équivalente ou inférieure. Les parties haute et basse peuvent être distinctes ou éventuellement monobloc.

La figure 3 illustre la composition de la paroi de la partie basse 2 du chausson, qui comprend trois couches : une couche interne formant doublure interne 8, destinée à être en contact du pied, et une couche externe 9, destinée à apporter de la tenue au chausson, délimitant un volume intérieur dans lequel un matériau de rembourrage thermoformable 10 sous forme de mousse est positionné. Ce matériau de rembourrage thermoformable 10 est positionné sur la paroi intérieure de la couche externe 9 et est fixé en général par collage sur celle-ci, et forme finalement une couche intermédiaire de rembourrage de la paroi du chausson. Le matériau thermoformable utilisé généralement est une mousse thermoplastique à base d'EVA et/ou de polyéthylène. A titre d'exemple, ce matériau peut être celui commercialisé sous la marque Flexalon 45, de densité entre 42 et 48 kg/m3.

Lorsqu'il est chauffé à sa température de déformation et une fois le pied inséré dans le chausson, le matériau de rembourrage thermoformable 10 prend la forme du pied de l'utilisateur de manière stable et durable, notamment en se comprimant dans les zones proéminentes du pied. La doublure interne 8 composée d'un matériau textile tendu sur le matériau de rembourrage est de préférence suffisamment souple et/ou élastique pour garantir le confort du pied, et accompagner la déformation de la mousse en matériau thermoformable 10. Cette doublure interne peut être formée d'une seule couche ou éventuellement de plusieurs couches ou plusieurs matériaux. La couche externe 9 garantit la rigidité et la tenue du chausson. Toutes ces couches formant la paroi du chausson sont avantageusement composées de matériaux textiles ou plastiques de rigidités et/ou densités différentes et sont solidarisées entre elles par des zones de collage et/ou couture ou encore de soudure. En variante, le chausson peut prendre toute autre architecture de l'état de la technique intégrant un matériau thermoformable, se déformant en expansion et/ou en compression après son chauffage.

La couche intermédiaire de rembourrage est destinée à améliorer le confort du skieur tout en assurant un calage du pied pour assurer un contrôle efficace et sensible ainsi qu'une transmission précise des appuis mécaniques sur les skis via les chaussures. Le matériau de rembourrage peut s'étendre sur la partie basse et/ou sur la partie haute du chausson et peut être composé entièrement de matériaux thermoformables, ou peut être composé localement de zones non-thermoformables, composées alors de matériaux appropriés comme des mousses d'EPDM.

Le chausson 1 comprend de plus deux indicateurs 20, comprenant chacun un matériau déformable. Dans ce mode de réalisation, les indicateurs 20 se présentent sous la forme d'un insert intégré à la couche externe 9, et disposés sur chaque flanc latéral de la partie basse 2 du chausson, approximativement au niveau de la malléole.

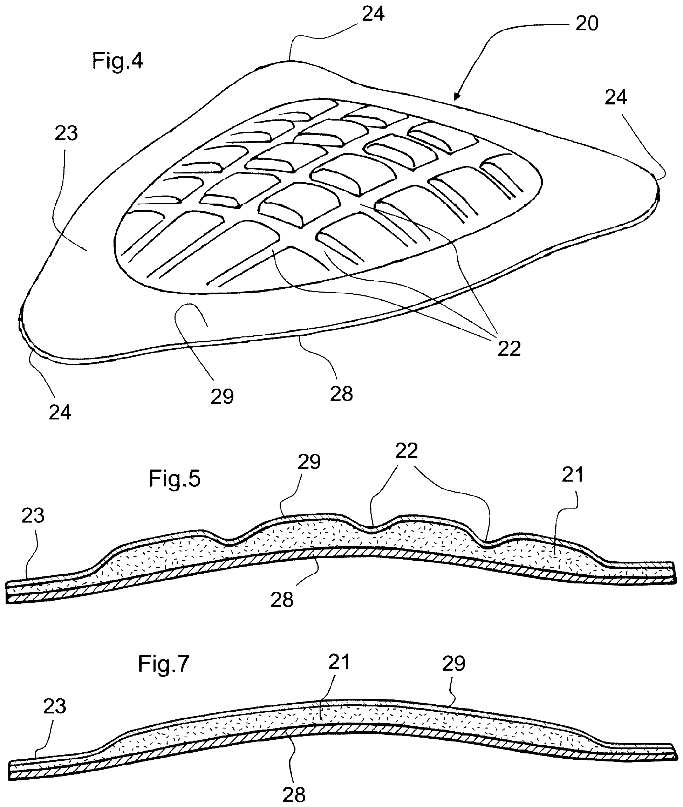

Les figures 4 à 6 représentent un indicateur 20 apte à être intégré dans le chausson 1 selon le mode de réalisation de l'invention. Comme cela est visible sur la coupe de la figure 5, l'indicateur a une épaisseur comprise entre 4 et 6 mm, de préférence entre 5 et 5,5 mm, et est en particulier d'épaisseur inférieure à l'épaisseur totale de la paroi du chausson.

L'indicateur comprend trois couches solidarisées entre elles de préférence par collage : une couche inférieure 28 en matériau thermoformable ou non thermoformable comme par exemple du polyuréthane, orientée vers l'intérieur du chausson 1 dans le mode de réalisation et qui donne sa structure à l'insert, notamment sa forme et sa rigidité, une couche supérieure 29, orientée vers l'extérieur du chausson 1, ces deux couches 28, 29 délimitant un volume central dans lequel est disposée une couche intermédiaire en matériau déformable. Selon ce mode de réalisation, le matériau déformable 21 est un matériau thermoformable différent du matériau thermoformable utilisé pour former le rembourrage 10, ou est, éventuellement identique ou similaire au matériau thermoformable 10 positionné dans couche intermédiaire de rembourrage du chausson. Avant mise en forme dans le moule lors de sa fabrication, le matériau déformable 21 de l'insert est d'épaisseur constante et s'étend sur toute la surface de l'insert. La température de thermoformage de la couche inférieure 28 pourra alors être plus élevée que la température de thermoformage du matériau déformable 21 de l'insert pour éviter la modification de sa forme par thermoformage dans un four en magasin, cette couche inférieure 28 apportant la structure à l'indicateur.

Selon ce mode de réalisation, l'indicateur 20 a été, dans une première étape avant son montage sur le chausson, préformé à chaud dans un moule pour lui donner une apparence particulièrement visible à l'œil nu, formée par une forme comprenant des reliefs et/ou des parties creuses sur l'une de ses faces sur le mode de réalisation. Dans l'exemple représenté, il présente une surface supérieure formant un quadrillage, obtenu par des lignes 22 de compression du matériau déformable 21. De ce fait, la couche supérieure 29 élastique présente le quadrillage identique à la couche de matériau déformable 21 préformée précédemment. Naturellement, tout autre motif pourrait en variante être formé, de préférence avec suffisamment de lignes de compression et une répartition sur la surface centrale de l'indicateur. La couche supérieure 29 de l'indicateur, solidarisée à la couche de matériau déformable 21 par exemple par collage, et visible depuis l'extérieur du chausson, présente une propriété souple et/ou élastique pour épouser la forme du matériau déformable 21, en garantissant ainsi l'effet visuel extérieur. Lors de cette première étape de thermoformage, une zone périphérique 23 entourant la surface centrale d'épaisseur inférieure est formée. Cette zone périphérique 23 forme une surface de fixation de l'insert à la couche externe 9 du chausson. Sur son autre face opposée à la face apparente, l'indicateur peut aussi prendre une forme spécifique, par exemple préformée pour un confort supérieur au niveau de la malléole, dans le cas où le matériau de la couche inférieure 28 est également thermoformable.

Différents modes de fabrication sont envisagés pour obtenir l'insert selon l'invention. Une première forme de réalisation est de découper l'insert dans une plaque sandwich composée des trois couches. Dans une deuxième forme de réalisation, la couche inférieure 28 peut être sur-injectée sur les autres couches 21, 29 de l'insert, de préférence, le matériau utilisé pour la couche inférieure 28 serait une mousse polyuréthane. Dans une troisième forme de réalisation, la couche inférieure 28 peut être collée à un sandwich préalablement réalisé avec les couches 21 et 29.

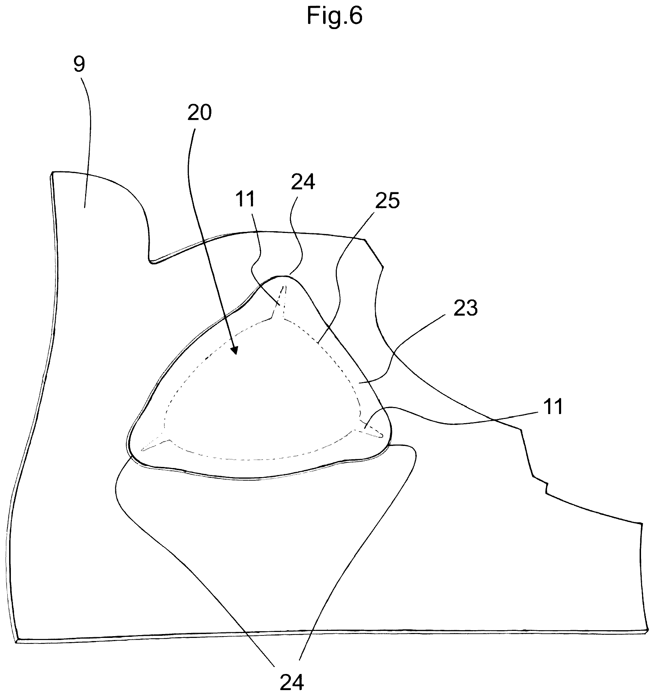

La figure 6 illustre la fixation de l'insert 20 sur le chausson 1, dont le résultat est aussi visible sur la figure 3, dans une phase intermédiaire d'un procédé de fabrication dudit chausson 1. Elle représente plus particulièrement la face intérieure de la couche externe 9 du chausson, avant mise en forme du chausson donc présentant une forme sensiblement plane. Cette couche externe 9 comprend une ouverture, au niveau de la malléole, où l'insert 20 est logé, sa couche supérieure 29 orientée vers l'extérieure du chausson. La zone périphérique 23 de l'insert 20 vient en appui sur la face intérieure de la couche externe 9, autour de l'ouverture mentionnée, et cette zone périphérique 23 est fixée sur cette couche externe 9, par une couture 25, de préférence réalisée sur tout le pourtour de l'insert 20 pour assurer l'étanchéité. En variante, tout autre moyen de fixation peut être employé, en remplacement ou en complément de la couture, comme un collage ou une soudure.

En remarque, dans cette réalisation, la couche inférieure 28 de l'insert présente une rigidité semblable à celle de la couche externe 9 du chausson 1. L'insert remplace ainsi une surface tronquée de la couche externe et remplit aussi une fonction consistant à assurer la continuité de la rigidité de la paroi du chausson. De plus, cette géométrie permet d'assurer l'étanchéité au niveau de la liaison entre l'insert et la paroi de chausson. Pour cela, le matériau de la couche inférieure 28 de l'insert, voire de la couche supérieure 29, est par nature étanche et la fixation mise en œuvre sur son pourtour garantit aussi son étanchéité. Dans tous les cas, l'étanchéité du chausson est garantie vis-à-vis de l'intérieur du chausson.

A titre d'exemple de réalisation non limitatif, la couche inférieure 28, la plus rigide est d'épaisseur préférentielle de 2,5 mm, peut être formée en polyoléfine de densité comprise entre 70 et 300 kg/m2 inclus, de préférence 150 kg/m2, par exemple comprenant du polyéthylène et optionnellement de l'EVA (Ethylène-acétate de vinyle). La couche supérieure 29 présente une épaisseur comprise entre 0,1 et 1 mm, de préférence 0,5 mm, peut se présenter en tissu bi-élastique, comme par exemple du Lycra. Le matériau déformable compris entre ces deux couches 28, 29 a une épaisseur préférentielle de 2,5 mm et peut être en polyoléfine de densité inférieure ou égale à 100 kg/m2, de préférence 30 kg/m2, par exemple comprenant du polyéthylène et de l'EVA (Ethylène-acétate de vinyle), avec une proportion d'EVA plus importante que celle de la couche inférieure 28.

Les différentes couches de l'insert peuvent comprendre des micro-perforages pour favoriser le transfert de chaleur.

Selon ce mode de réalisation, l'insert présente une forme globalement triangulaire, avec des angles 24 arrondis. Pour favoriser la déformation de la couche externe 9 du chausson au niveau de l'interface avec l'insert, en réduisant les contraintes transmises sur l'insert, des fentes 11 sont réalisées dans la couche externe 9 du chausson au niveau de ces angles 24 où se concentrent plus particulièrement les efforts.

Le fonctionnement de ce chausson 1, et plus particulièrement de ses indicateurs 20, va maintenant être expliqué.

Lors de l'acquisition d'un chausson, un utilisateur constate visuellement par les damiers en relief formés sur la surface visible des indicateurs 20 que le chausson n'a pas été chauffé auparavant, ce qui forme une première indication de l'état neuf du chausson. Ensuite, afin de procéder à la mise en forme du chausson à l'anatomie du pied de son futur propriétaire, le vendeur positionne le chausson dans un four pour le chauffer. Lorsque la température de déformation est atteinte, le matériau déformable 21 des indicateurs 20 tend à retrouver sa forme initiale, puisque les parties compressées au niveau des lignes 22 de compression tendent à une expansion naturelle vers leur forme initiale, ce qui efface progressivement ces lignes 22, jusqu'à atteindre une surface sensiblement plane et uniforme, comme représenté en figure 7. Le vendeur constate ainsi visuellement que le chausson a atteint la bonne température. Les indicateurs 20 remplissent donc la fonction d'indication de bonne température de chauffe du chausson : un chauffage insuffisant est immédiatement détecté par la non déformation des indicateurs 20. Lorsque cette bonne température de chauffe est atteinte, le vendeur présente le chausson à son propriétaire, qui constate aussi que les indicateurs ont changé de forme. Il chausse alors le chausson, dont le matériau thermoformable 10 est à sa température de déformation, et la paroi du chausson épouse alors le volume de son pied. Naturellement, le matériau déformable des indicateurs est choisi pour que sa température de déformation soit sensiblement égale à la température de déformation du rembourrage thermoformable contenu dans la couche intermédiaire de rembourrage du chausson, voire légèrement inférieure, en général autour de 80°C, de préférence entre 60 et 100°C.

Le fonctionnement des indicateurs n'est pas quelconque, il est basé sur un changement de forme : ainsi, au-delà de l'indication de la bonne température, ces indicateurs mettent en évidence visuellement le phénomène plus général mais invisible de changement de forme et/ou d'état du matériau de rembourrage thermoformable 10 contenu dans la couche intermédiaire de la paroi du chausson 1, ce qui est attrayant et rassurant pour le propriétaire du chausson. De plus, si l'indicateur met en œuvre un principe de fonctionnement similaire à celui de la couche intermédiaire de la paroi du chausson, il indique plus directement la bonne réaction du matériau de rembourrage thermoformable 10 contenu dans la couche intermédiaire du chausson, ce qui est encore plus fiable pour savoir que le chausson est prêt à être mis en forme que la seule indication de température. Comme mentionné, son matériau déformable 21 peut être voisin ou identique au matériau thermoformable 10 de la couche intermédiaire du chausson.

En variante, tout autre élément présentant une déformation à une température sensiblement identique à celle de la paroi du chausson peut être utilisé. De plus, le matériau déformable 21 a été mis en forme par compression et fonctionne ensuite en expansion lors de son chauffage. En variante, un matériau pourrait être mis en forme par expansion et devenir comprimable après son chauffage, auquel cas le phénomène pourrait être mis en évidence manuellement par un toucher du vendeur et/ou du propriétaire du chausson. Selon une autre variante, l'élément déformable pourrait comprendre un matériau à mémoire de forme.

De plus, l'insert décrit précédemment comprend trois couches : en variante, il pourrait comprendre deux couches, ou toute autre structure déformable.

Sur le mode de réalisation, deux indicateurs ont été utilisés, à hauteur de malléole. Ce positionnement correspond à des zones particulièrement sensibles pour le pied d'un utilisateur, susceptible de ressentir des douleurs si une pression trop importante y est exercée. Ainsi, un tel positionnement des indicateurs permet d'une part de mesurer la température de la paroi dans cette zone particulière pour laquelle la mise en forme est importante et doit être réussie, et d'autre part d'illustrer la fonction de confort assurée par le chausson en choisissant une densité de mousse adaptée et en insistant sur son action dans ces zones spécifiques. En variante, un indicateur peut naturellement être disposé en toute autre zone de la paroi du chausson, par exemple dans la languette 6, ou à l'arrière du chausson sur sa partie haute. Il peut être visible sur la surface extérieure du chausson, comme représenté, ou sur sa surface intérieure, l'important étant que l'utilisateur puisse facilement le voir en manipulant son chausson. Aussi, un insert tel que décrit précédemment peut être agencé au sein de la couche interne 8 du chausson.

En variante, les indicateurs peuvent ne pas uniquement illustrer psychologiquement la fonction de confort de la structure de la paroi du chausson, mais ils peuvent participer directement au confort, en complément, voire en remplacement, du reste de la paroi du chausson. Pour cela, la couche de l'insert orientée vers l'intérieur du chausson peut être souple, et le matériau déformable agit ainsi directement sur le confort du pied. En variante, la couche rigide de l'insert, orientée vers l'intérieur du chausson, présente une forme non plane, adaptée à l'anatomie particulière de la malléole.

D'autre part, deux indicateurs ont été implémentés, mais tout autre nombre est envisageable. Un seul peut notamment suffire. Il est aussi possible d'en mettre plus de deux, notamment pour garantir la température sur plusieurs zones éloignées entre elles du chausson.

Selon un autre mode de réalisation, le chausson peut intégrer des indicateurs différents, pour augmenter la fiabilité de l'indication. Ces indicateurs peuvent être de structure similaire mais intégrant des matériaux déformables différents, par exemple des matériaux thermoformables différents, notamment réagissant à des températures légèrement différentes. En particulier, un indicateur supplémentaire pourrait réagir à la température maximale supportée par le pied d'un utilisateur, ou à la température de détérioration du matériau du rembourrage. En variante, un indicateur supplémentaire pourrait être associé à l'indicateur décrit par l'invention, cet indicateur supplémentaire pouvant par exemple comprendre un composant changeant de couleur à une certaine température, comme une encre sensible à la température.

Finalement, la solution atteint ainsi bien les objets recherchés puisque l'élément déformable de l'indicateur garantit la bonne mise en œuvre de la mise en forme du chausson.

Le mode de réalisation a été décrit par l'intermédiaire d'un indicateur se présentant comme un insert distinct du chausson, et fixé au chausson. En variante, l'indicateur peut être formé à partir de la paroi du chausson elle-même. Pour cela, une surface de la paroi du chausson pourrait être préformée comme expliqué précédemment, le matériau de rembourrage thermoformable 10 de la paroi du chausson remplissant alors la fonction de matériau déformable de l'indicateur. Cette réalisation serait particulièrement compatible avec la surface intérieure du chausson, puisque la couche interne 8 est souple par nature. Dans ce cas, cette couche interne 8 serait de préférence solidarisée sur toute sa surface à l'élément de rembourrage 10.

D'autre part, selon une autre variante de réalisation, l'indicateur se présente comme un insert amovible, de sorte que les indicateurs deviennent interchangeables. Une telle variante de réalisation présente l'avantage de permettre le remplacement d'un indicateur sur le chausson, ce qui est particulièrement utile si le chausson doit subir une nouvelle étape de mise en forme (par un nouveau thermoformage de sa paroi), soit par exemple lors d'une revente du chausson, soit après une longue période d'utilisation. Pour cela, la paroi du chausson peut contenir un logement adapté pour le positionnement réversible d'un insert. Dans une autre variante, l'insert pourrait être fixé, par exemple par un velcro ou un collage, sur un chausson thermoformable, ce dernier pouvant alors être un chausson standard sans logement particulier pour l'insert. Dans une telle solution, un même insert pourrait être utilisé plusieurs fois, par exemple par un vendeur au niveau d'un point de vente, l'insert subissant une étape de remise en forme après chaque utilisation.

Ainsi, un mode de réalisation de l'invention porte aussi sur un insert pour chausson pour chaussure de sport en tant que tel, caractérisé en ce qu'il comprend un élément déformable apte à se déformer à une température de déformation d'un matériau de rembourrage thermoformable d'une paroi de chausson, pour indiquer que le chausson a été porté à une température sensiblement égale à sa température de déformation, formant ainsi un indicateur 20 pour chausson. Cet insert peut comprendre un élément de fixation, comme un velcro ou une bande collante, apte à sa fixation, de préférence amovible, sur un chausson de chaussure de sport.

Enfin, comme cela a été vu précédemment, un tel chausson est prévu pour son assemblage avec une coque rigide externe, pour former une chaussure de ski. En variante, il peut être intégré de façon amovible ou non dans toute chaussure de sport. Ce chausson peut aussi être doté d'une semelle plus élaborée et éventuellement d'une paroi plus rigide, pour former une chaussure autonome en tant que telle. Ce type de chausson souple avec semelle antidérapante pourrait être particulièrement utilisé pour les engins de glisse sur eau du type kite surf, surf, ou planche à voile. Ainsi, le terme chausson s'entend au sens large comme tout élément chaussant, recevant directement le pied d'un utilisateur, et devant être associé ou non à d'autres composants pour former une chaussure finie. L'indicateur selon l'invention est utile à toute chaussure de sport dont une partie au moins doit être thermoformée à l'anatomie du pied, notamment pour les sports de glisse.

L'indicateur selon l'invention est particulièrement utile pour indiquer que le chausson a atteint la bonne température pour son thermoformage par le pied de l'utilisateur, principalement en magasin, mais aussi éventuellement pour son thermoformage en usine par l'insertion d'une forme prédéfinie à l'intérieur du chausson.

## Revendications

1. Chausson (1) pour chaussure de sport, comprenant une paroi comprenant au moins une couche qui présente une zone formée d'un matériau de rembourrage thermoformable (10) apte à sa mise en forme après son chauffage lorsqu'il est porté à une température de déformation, **caractérisé en ce qu'**il comprend au moins un indicateur (20), comprenant un élément déformable se déformant à la température de déformation du matériau de rembourrage thermoformable (10) de la paroi du chausson, pour indiquer que le chausson a été porté à une température sensiblement égale à sa température de déformation, pour laquelle sa mise en forme est possible.

2. Chausson (1) pour chaussure de sport selon la revendication précédente, **caractérisé en ce qu'**il comprend un indicateur (20) comprenant un matériau thermoformable (21).

3. Chausson (1) pour chaussure de sport selon la revendication précédente, **caractérisé en ce que** le matériau déformable (21) comprend une forme avec des reliefs, aptes à s'atténuer ou disparaître après son chauffage à la température de déformation de la paroi.

4. Chausson (1) pour chaussure de sport selon la revendication précédente, **caractérisé en ce que** les reliefs du matériau déformable (21) sont formés par des lignes (22) de compression, notamment de type quadrillage.

5. Chausson (1) pour chaussure de sport selon l'une des revendications précédentes, **caractérisé en ce qu'**il comprend au moins un indicateur (20) disposé latéralement au niveau de la malléole.

6. Chausson (1) pour chaussure de sport selon l'une des revendications précédentes, **caractérisé en ce qu'**il comprend un indicateur (20) sous forme d'insert intégré dans une couche interne (8) ou externe (9) de la paroi du chausson, au niveau d'une ouverture pratiquée dans ladite couche (8, 9) pour rendre visible l'indicateur (20) depuis respectivement l'intérieur ou l'extérieur du chausson.

7. Chausson (1) pour chaussure de sport selon la revendication précédente, **caractérisé en ce que** l'insert comprend une première couche (28) et une seconde couche (29) souple et/ou élastique, visible depuis l'extérieur du chausson, et un matériau déformable disposé entre les deux couches (28, 29).

8. Chausson (1) pour chaussure de sport selon la revendication précédente, **caractérisé en ce que** l'insert comprend une zone périphérique (23) fixée à la couche externe (9) du chausson, par une couture (25) s'étendant sur toute sa périphérie et/ou par un collage et/ou par une soudure.

9. Chausson (1) pour chaussure de sport selon l'une des revendications 6 à 8, **caractérisé en ce que** l'insert est amovible.

10. Chausson (1) pour chaussure de sport selon l'une des revendications précédentes, **caractérisé en ce qu'**il comprend au moins un indicateur (20) positionné dans une couche de la paroi de la languette du chausson.

11. Chausson (1) pour chaussure de sport selon l'une des revendications précédentes, **caractérisé en ce que** la couche interne de l'élément déformable d'un indicateur (20) est aussi déformée par insertion d'un pied dans le chausson après son chauffage pour participer à la mise en forme du chausson autour du pied, et participer au confort du chausson.

12. Chausson selon l'une des revendications précédentes, **caractérisé en ce qu'**il comprend une semelle pour former une chaussure de sport autonome.

13. Chaussure de sport comprenant une coque externe, **caractérisée en ce qu'**elle comprend un chausson de confort selon l'une des revendications 1 à 11.

14. Chaussure de sport selon la revendication précédente, **caractérisée en ce que** le chausson de confort est amovible.

15. Procédé de fabrication d'un chausson (1) pour chaussure de sport selon l'une des revendications 1 à 11, **caractérisé en ce qu'**il comprend les étapes suivantes :
- mise en forme avec reliefs dans un moule d'un insert comprenant un matériau déformable ;
- fixation de l'insert dans une ouverture d'une paroi du chausson pour chaussure de sport de sorte à laisser visibles les reliefs de l'insert.

## Patentansprüche

1. Innenschuh (1) für Sportschuh, der eine Wand umfasst, die wenigstens eine Schicht enthält, die eine Zone aufweist, die aus einem wärmeformbaren Polstermaterial (10) gebildet ist, das nach seiner Erwärmung, wenn es auf eine Verformungstemperatur gebracht worden ist, geformt werden kann, **dadurch gekennzeichnet, dass** er wenigstens einen Anzeiger (20) umfasst, der ein verformbares Element enthält, das sich bei der Verformungstemperatur des wärmeformbaren Polstermaterials (10) der Wand des Innenschuhs verformt, um anzuzeigen, dass der Innenschuh auf eine Temperatur gebracht worden ist, die im Wesentlichen gleich seiner Verformungstemperatur ist, für die die Formgebung möglich ist.

2. Innenschuh (1) für Sportschuh nach dem vorhergehenden Anspruch, **dadurch gekennzeichnet, dass** er einen Anzeiger (20) umfasst, der ein wärmeformbares Material (21) enthält.

3. Innenschuh (1) für Sportschuh nach dem vorhergehenden Anspruch, **dadurch gekennzeichnet, dass** das wärmeformbare Material (21) eine Form mit Reliefs aufweist, die sich nach der Erwärmung auf die Verformungstemperatur der Wand verkleinern oder verschwinden können.

4. Innenschuh (1) für Sportschuh nach dem vorhergehenden Anspruch, **dadurch gekennzeichnet, dass** die Reliefs des verformbaren Materials (21) durch Kompressionslinien (22), insbesondere vom Typ quadratisches Liniennetz, gebildet sind.

5. Innenschuh (1) für Sportschuh nach einem der vorhergehenden Ansprüche, **dadurch gekennzeichnet, dass** er wenigstens einen Anzeiger (20) umfasst, der auf Höhe des Knöchels seitlich angeordnet ist.

6. Innenschuh (1) für Sportschuh nach einem der vorhergehenden Ansprüche, **dadurch gekennzeichnet, dass** er einen Anzeiger (20) in Form eines in eine innere Schicht (8) oder in äußere Schicht (9) der Innenschuhwand integrierten Einsatzes auf Höhe einer in der Schicht (8, 9) ausgebildeten Öffnung umfasst, um den Anzeiger (20) von innerhalb bzw. außerhalb des Innenschuhs sichtbar zu machen.

7. Innenschuh (1) für Sportschuh nach dem vorhergehenden Anspruch, **dadurch gekennzeichnet, dass** der Einsatz eine erste Schicht (28) und eine zweite Schicht (29), die nachgiebig und/oder elastisch sind und von außerhalb des Innenschuhs sichtbar sind, und ein verformbares Material, das zwischen den beiden Schichten (28, 29) angeordnet ist, umfasst.

8. Innenschuh (1) für Sportschuh nach dem vorhergehenden Anspruch, **dadurch gekennzeichnet, dass** der Einsatz eine Umfangszone (23) aufweist, die an der äußeren Schicht (9) des Innenschuhs durch eine Naht (25), die auf dem gesamten Umfang verläuft, und/oder durch Verkleben und/oder durch Verschweißen befestigt ist.

9. Innenschuh (1) für Sportschuh nach einem der Ansprüche 6 bis 8, **dadurch gekennzeichnet, dass** der Einsatz entnehmbar ist.

10. Innenschuh (1) für Sportschuh nach einem der vorhergehenden Ansprüche, **dadurch gekennzeichnet, dass** er wenigstens einen Anzeiger (20) umfasst, der in einer Schicht der Wand der Zunge des Innenschuhs positioniert ist.

11. Innenschuh (1) für Sportschuh nach einem der vorhergehenden Ansprüche, **dadurch gekennzeichnet, dass** die innere Schicht des verformbaren Elements eines Anzeigers (20) außerdem durch Einsetzen eines Fußes in den Innenschuh nach seiner Erwärmung verformt wird, um an der Formgebung des Innenschuhs um den Fuß teilzuhaben und um am Komfort des Innenschuhs teilzuhaben.

12. Innenschuh nach einem der vorhergehenden Ansprüche, **dadurch gekennzeichnet, dass** er eine Sohle aufweist, um einen selbstständigen Sportschuh zu bilden.

13. Sportschuh, der eine äußere Schale aufweist, **dadurch gekennzeichnet, dass** er einen Komfort-Innenschuh nach einem der Ansprüche 1 bis 11 umfasst.

14. Sportschuh nach dem vorhergehenden Anspruch, **dadurch gekennzeichnet, dass** der Komfort-Innenschuh entnehmbar ist.

15. Verfahren für die Herstellung eines Innenschuhs (1) für Sportschuh nach einem der Ansprüche 1 bis 11, **dadurch gekennzeichnet, dass** es die folgenden Schritte umfasst:
- Formen eines Einsatzes, der ein verformbares Material aufweist, mit Reliefs in einer Form; und
- Befestigen des Einsatzes in einer Öffnung einer Wand des Innenschuhs für Sportschuh, derart, dass die Reliefs des Einsatzes sichtbar bleiben.

## Claims

1. Sport shoe innerboot (1), including a wall including at least one layer that features an area formed of a thermoformable padding material (10) adapted to be shaped after heating it when it has been heated to a deformation temperature, **characterized in that** it comprises at least one indicator (20), comprising a deformable element deforming at the deformation temperature of the thermoformable padding material (10) of the wall of the innerboot, to indicate that the innerboot has been heated to a temperature substantially equal to its deformation temperature, at which shaping it is possible.

2. Sport shoe innerboot (1) according to the preceding claim, **characterized in that** it comprises an indicator (20) including a thermoformable material (21).

3. Sport shoe innerboot (1) according to the preceding claim, **characterized in that** the deformable material (21) comprises a shape with raised patterns adapted to be attenuated or to disappear after it is heated to the deformation temperature of the wall.

4. Sport shoe innerboot (1) according to the preceding claim, **characterized in that** the raised patterns of the deformable material (21) are formed by compression lines (22), notably of grid type.

5. Sport shoe innerboot (1) according to one of the preceding claims, **characterized in that** it comprises at least one indicator (20) disposed laterally at the level of the malleolus.

6. Sport shoe innerboot (1) according to one of the preceding claims, **characterized in that** it comprises an indicator (20) in the form of an insert integrated into an inside layer (8) or an outside layer (9) of the wall of the innerboot at the level of an opening in said layer (8, 9) to render the indicator (20) visible from inside or outside the innerboot, respectively.

7. Sport shoe innerboot (1) according to the preceding claim, **characterized in that** the insert comprises a first layer (28) and a flexible and/or elastic second layer (29) visible from outside the innerboot and a deformable material disposed between the two layers (28, 29).

8. Sport shoe innerboot (1) according to the preceding claim, **characterized in that** the insert comprises a peripheral area (23) fixed to the outside layer (9) of the innerboot by stitching (25) extending over all its periphery and/or by gluing and/or by welding.

9. Sport shoe innerboot (1) according to one of claims 6 to 8, **characterized in that** the insert is removable.

10. Sport shoe innerboot (1) according to one of the preceding claims, **characterized in that** it comprises at least one indicator (20) positioned in a layer of the wall of the tongue of the innerboot.

11. Sport shoe innerboot (1) according to one of the preceding claims, **characterized in that** the inside layer of the deformable element of an indicator (20) is also deformed by insertion of a foot into the innerboot after it is heated to participate in shaping the innerboot around the foot and to contribute to the comfort of the innerboot.

12. Innerboot according to one of the preceding claims, **characterized in that** it comprises a sole to form an autonomous sport shoe.

13. Sport shoe comprising an outside shell, **characterized in that** it comprises a comfort innerboot according to one of claims 1 to 11.

14. Sport shoe according to the preceding claim, **characterized in that** the comfort innerboot is removable.

15. Method of manufacturing a sport shoe innerboot (1) according to one of claims 1 to 11, **characterized in that** it comprises the following steps:
- shaping an insert comprising a deformable material with raised patterns in a mould;
- fixing the insert in an opening of a wall of the sport shoe innerboot so as to leave the raised patterns of the insert visible.
